Europäisches Patentamt

European Patent Office

Office européen des brevets

(19)

(11) Publication number: **0 492 491 A1**

## EUROPEAN PATENT APPLICATION

(12)

(21) Application number: **91121921.0**

(22) Date of filing: **20.12.91**

(51) Int. Cl.5: **C04B 35/52**, C04B 35/64

(30) Priority: **28.12.90 JP 409477/90**
**28.08.91 JP 217331/90**

(43) Date of publication of application:
**01.07.92 Bulletin 92/27**

(84) Designated Contracting States:
**DE FR GB IT**

(71) Applicant: **Sumitomo Electric Industries, Ltd.**
**5-33, Kitahama 4-chome, Chuo-ku**
**Osaka 541(JP)**

(72) Inventor: **Sakagami, Seigou c/oltami Works of**
**Sumitomo**
**Electic Ind., Ltd., 1-1, Koyakita 1-chome**
**Itami-shi, Hyogo(JP)**
Inventor: **Takemura, Yohsuke c/oltami Works**

of Sumitomo
**Electic Ind., Ltd., 1-1, Koyakita 1-chome**
**Itami-shi, Hyogo(JP)**
Inventor: **Wakamatsu, Satoshi c/oltami Works**
of Sumitomo
**Electic Ind., Ltd., 1-1, Koyakita 1-chome**
**Itami-shi, Hyogo(JP)**
Inventor: **Takemoto, Takatoshi c/o Itami**
**Works of Sumitomo**
**Electic Ind., Ltd., 1-1, Koyakita 1-chome,**
**Itami-shi, Hyogo(JP)**

(74) Representative: **Herrmann-Trentepohl,**
**Werner, Dipl.-Ing. et al**
**Herrmann-Trentepohl, Kirschner, Grosse,**
**Bockhorni & Partner Forstenrieder Allee 59**
**W-8000 München 71(DE)**

(54) **Method of manufacturing carbon-fiber/carbon composite material.**

(57) Disclosed is a method of manufacturing a carbon-fiber/carbon composite material which can improve economical efficiency while maintaining a certain degree of strength. According to the present invention, a matrix material and carbon fiber are mechanically mixed by deciding the composition from the carbonization ratio of the matrix material and the desired ratio of fiber to be contained in a resultant product. After pressure-molding the mixture, the mixture is cured, and carbonized while being further pressurized. Thus, another matrix material fills open pores left behind by the evaporated matrix material at the time of molding, curing, etc., thereby increasing the density. A carbon-fiber/carbon composite material of good quality can be provided without requiring repetition of steps. Therefore, time required for manufacturing can be reduced, and economical efficiency can be improved while maintaining a certain degree of strength.

FIG.1

## BACKGROUND OF THE INVENTION

### Field of the Invention

The present invention relates generally to a method of manufacturing a carbon-fiber/carbon composite material (hereinafter carbon-fiber/carbon composite material), and more specifically, to a method of manufacturing a carbon-fiber/carbon composite material in which carbon fiber and a matrix material are mixed, then molded, cured and carbonized.

### Description of the Background Art

Impregnation, CVD (Chemical Vapor Deposition), etc. are known as methods of manufacturing carbon-fiber/carbon composite materials. These methods are disclosed, for example, in TANSO SENI SANGYO - (CARBON FIBER INDUSTRY) by KENICHI MORITA, KINDAI HENSHUSHA. According to the impregnation method, a prepreg is formed by impregnating a resin material onto a fiber base material. A multi-layered structure of prepregs is molded and cured thereafter. Then, the cured structure is carbonized and which temperature is finally raised to a high level, thereby forming a carbon-fiber/carbon composite material.

As described above, conventional methods such as impregnation, pressure impregnation carbonization, chemical vapor deposition, etc. are often used for manufacturing carbon-fiber/carbon composite materials. These manufacturing methods however all bear a problem of a long period of time required for manufacturing. More specifically, in the case of the impregnation method, for example, a part of the resin material impregnated on the fiber base material evaporates in the steps of curing and carbonization, the evaporated material leaves behind open pores. The formation of such pores degrades the density of the material, and, therefore, it is necessary to repeat the steps of curing and carbonization a number of times by impregnating the resin material a number of times, in order to provide a carbon-fiber/carbon composite material with a resultant high density. This results in complication of the manufacturing process, thereby requiring a longer time period for manufacturing. The prolonged time period for manufacturing pushes up the price of end products.

A number of manufacturing methods have been proposed, in which a carbon-fiber/carbon composite material can be manufactured in a shorter period of time. These approaches are disclosed, for example, in Japanese Patent Publication No. 63-5349, Japanese Patent Application No. 61-197467, etc. According to these methods, long fiber is supplied into a medium formed by kneading carbon powder and a resin material. An electron deposition body formed of the long fiber and substances sticking thereto is produced by applying voltage into the medium. After the electron deposition body is cut out into a prescribed length and molded, the temperature of the body is raised to a high level, thereby providing a carbon-fiber/carbon composite material. According to the method, a high performance carbon-fiber/carbon composite material can be produced in a short period of time and less costly for its performance.

However, some fields of technology do not require such a high performance carbon-fiber/carbon composite material. A carbon-fiber/carbon composite material produced by the proposed method is therefore perceived as too expensive in such fields of the industry.

It is difficult to manufacture a carbon-fiber/carbon composite material having a certain degree of strength (performance) and yet superior from economical point of view, according to the conventional methods of manufacturing a carbon-fiber/carbon composite material.

## SUMMARY OF THE INVENTION

It is therefore an object of the present invention to improve economical efficiency (manufacturing cost) while maintaining a certain degree of strength, in a method of manufacturing a carbon-fiber/carbon composite material.

Another object of the present invention is to reduce time required for manufacturing, in a method of manufacturing a carbon-fiber/carbon composite material.

According to a method of manufacturing a carbon-fiber/carbon composite material, the composition ratio of a matrix material and carbon fiber is decided based on the carbonizing ratio of the matrix material and the desired ratio of the fiber to be contained in an end product, and these materials are mechanically mixed. After molding the mixture by pressurizing, the mixture is cured, and carbonized while being subject to further pressurization.

In operation, a matrix material and carbon fiber are mechanically mixed, the composition ratio of which is decided by the carbonization ratio of the matrix material and the desired ratio of the fiber to be included in an end product, and after being molded under pressure, the mixture is cured and carbonized while being further pressurized. The open pores left behind by the evaporated matrix material in the process of molding, curing and carbonization are therefore filled with another matrix material, thereby increasing the density. A carbon-fiber/carbon composite material of good quality can therefore be provided without requiring repetition of steps.

The foregoing and other objects, features, aspects and advantages of the present invention will become more apparent from the following detailed description of the present invention when taken in conjunction with the accompanying drawings.

BRIEF DESCRIPTION OF THE DRAWING

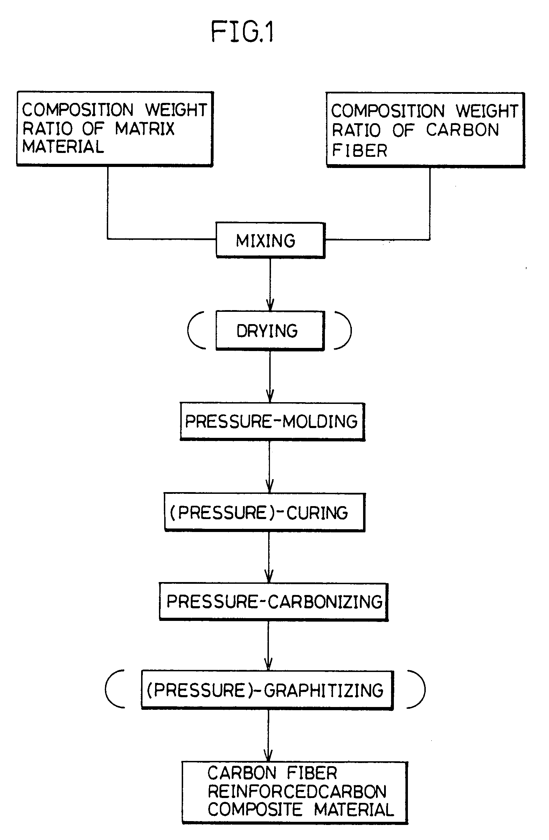

Fig. 1 is a flow chart for illustrating a manufacturing process in accordance with the present invention.

DESCRIPTION OF THE PREFERRED EMBODIMENTS

The inventors et al. conducted experiments by comparison as follows (EMBODIMENT 1, EMBODIMENT 2, EMBODIMENT 3, COMPARISON EXAMPLE 1, COMPARISON EXAMPLE 2) for confirming the effects provided by the present invention.

(EMBODIMENT 1)

Description will be provided on one embodiment in accordance with a method of manufacturing a carbon-fiber/carbon composite material in accordance with the present invention.

(1) Powdered phenol resin and a carbon fiber (13mm in length) were mixed, using a V type mixer. The weight ratio was 3:1 at that time.

(2) The mixture was heat-molded at a temperature of 150°C. The maximum surface pressure at that time was 50kg/cm$^2$.

(3) The mixture was cured at a temperature of 300°C while being clamped so that its thickness was not increased.

(4) A carbon-fiber/carbon composite material was obtained by raising the temperature to as high as 2000°C in a hot press. The maximum surface pressure at that time was 100kg/cm$^2$.

(EMBODIMENT 2)

Now, description will be provided on a second embodiment in accordance with a manufacturing method of a carbon-fiber/carbon composite material in accordance with the present invention.

(1) Furan resin, natural graphite powder, and a carbon fiber (50 to 1000mm in length) were mixed using a V type mixer. The weight ratio was 3:1:1 at that time.

(2) The mixture was heat-molded at a temperature of 130°C. The maximum surface pressure at that time was 80kg/cm$^2$.

(3) The heat-molded mixture was cured at a temperature of 200°C while being clamped so that its thickness was not increased.

(4) A carbon-fiber/carbon composite material was obtained by raising the temperature to as high as 3000°C in a hot press furnace. The maximum surface pressure at that time was 80kg/cm$^2$.

(EMBODIMENT 3)

Description will be provided on a third embodiment in accordance with a manufacturing method of a carbon-fiber/carbon composite material in accordance with the present invention.

(1) Phenol resin, self sintering carbon powder, a carbon fiber (50-1000mm in length) were mixed using a V type mixer. The weight ratio at that time was 2:1:1.

(2) The mixture was heat-molded at a temperature of 130°C. The maximum plane-pressure at that time was 80kg/cm$^2$.

(3) The heat-molded mixture was cured at a temperature of 200°C while being clamped so that the thickness of the plate was not increased.

(4) A carbon-fiber/carbon composite material was obtained by raising the temperature to as high as 2500°C in a hot press. The maximum surface pressure at the time was 80kg/cm$^2$.

(COMPARISON EXAMPLE 1)

Now, COMPARISON EXAMPLE 1 will be described, and the COMPARISON EXAMPLE 1 corresponds to a conventional impregnation method.

(1) A prepreg of phenol resin and non-woven fabric of carbon fiber is produced. The weight ratio at that time was 45:55.

(2) The prepreg was formed into a layered structure at a temperature of 150°C. The surface pressure at that time was 20kg/cm$^2$.

(3) The layer-structured form was cured at a temperature of 300°C.

(4) The cured form was carbonized at a temperature of 1000°C.

(5) Thus produced form was once again impregnated with phenol resin, and the step of the above-described curing and carbonization as well as the step of reimpregnation are repeated three times.

(6) A carbon-fiber/carbon composite material was obtained by raising the temperature to as high as 2500°C.

(COMPARISON EXAMPLE 2)

Now, description will be provided on COMPARISON EXAMPLE 2, and this corresponds to a technique conventionally proposed as disclosed in Japanese Patent Laying Open No. 63-5349 and Japanese Patent Application No. 61-197467.

(1) Self-sintering carbon powder was disposed into a medium well kneaded with denatured polyacylamide resin The weight ratio at that time was 1:1.

(2) An electron deposited body was obtained by supplying continuously carbon fiber into the above-described medium, and by applying a voltage of 100V between the opposing electrodes. The ratio of the carbon fiber and substances sticking thereto in the mixture was 2:3 at that time.

(3) The mixture was cut out into a length of 13mm and is heat-molded at a temperature of 130°C. The maximum surface pressure at that time was 80kg/cm$^2$.

(4) A carbon-fiber/carbon composite material was obtained by raising the temperature to as high as 2500°C in a hot press. The maximum surface pressure at that time was 120kg/cm$^2$.

The characteristics of the carbon-fiber/carbon composite materials obtained as the results of the experiments, EMBODIMENT 1, EMBODIMENT 2, EMBODIMENT 3, COMPARISON EXAMPLE 1, and COMPARISON EXAMPLE 2 will be set forth in the following Table 1.

4

Table 1

| | EMBODIMENT 1 | EMBODIMENT 2 | EMBODIMENT 3 | COMPARISON EXAMPLE 1 | COMPARISON EXAMPLE 2 |
|---|---|---|---|---|---|
| STRENGTH | O | O | O | O | ● |
| ECONOMICS EFFICIENCY | ● | ● | ● | △ | O |
| ● ... VERY GOOD   O ... GOOD   △ ... POOR | | | | | |

EP 0 492 491 A1

As can be understood from Table 1, the EMBODIMENT 1, EMBODIMENT 2 AND EMBODIMENT 3 of the present invention are economically advantageous as compared to COMPARISON EXAMPLE 1 AND COMPARISON EXAMPLE 2. It is understood that Inferior in strength compared to COMPARISON EXAMPLE 2, but they still maintains a certain degree of strength. As described above, by EMBODIMENTS 1 and 2, a manufacturing method of a carbon-fiber/carbon composite material by which economical efficiency is further improved while maintaining a certain degree of strength was provided.

Now, referring to Fig. 1, a manufacturing process in accordance with the present invention will be schematically described in the following. A matrix material and carbon fiber are mechanically mixed by deciding the composite weight ratio of the matrix material and the carbon fiber from the carbonization ratio of the matrix material and the desired ratio of fiber included in an end product. In the case of wet mixing, the mixture of carbon fiber in the matrix material are dried. Then, the dried mixture is filled into a metal mold, and is pressure-molded. Then, curing is conducted. It is preferable to prevent the expansion of the form by clamping at the time of curing, but in the case of a form apparently unlikely to expand, no such clamp will be necessary. The cured form is carbonized using an HIP or a hot press. Thereafter, the cured form is graphitized in a high temperature sintering furnace if necessary. Alternatively, the cured form is graphitized, using the HIP or the pressure sintering furnace. The above-described steps are conducted without repetition.

According to the step of mixing of the present embodiment, the method of mixing preferably takes advantage of free fall, which does not damage the carbon fiber. In the process of molding, curing, carbonization and/or graphitization, pressure in accordance with the movement of matrix material will be necessary. In other words, an excessive pressure damages the carbon fiber or matrix thereby degrading the strength of the resultant product, and, therefore, the conditions should be provided for each step taking into account these problems.

As described above, according to the present invention, a matrix material and carbon fiber are mechanically mixed by deciding the composition from the carbonization ratio of the matrix material and the desired ratio of fiber contained in an end product. After having been pressure-molded, the mixture is cured, further pressured and carbonized. Thus, another matrix material fills the open pores left behind by the evaporated matrix material in the process of molding, curing and carbonization, thereby increasing its density. A carbon-fiber/carbon composite material of good quality can therefore be obtained without repeating the steps a number of times. Consequently, time required for manufacturing can be reduced, the economic efficiency of the product can be further improved while maintaining a certain degree of strength.

Although the present invention has been described and illustrated in detail, it is clearly understood that the same is by way of illustration and example only and is not to be taken by way of limitation, the spirit and scope of the present invention being limited only by the terms of the appended claims.

**Claims**

1. A method of manufacturing a carbon-fiber/carbon composite material, wherein after carbon fiber and a matrix material are mixed, the mixed material is molded, cured and carbonized, said method comprising the steps of:
   mechanically mixing said matrix material and said carbon fiber after deciding the composition ratio of said matrix material and said carbon fiber from the carbonization ratio of said matrix material and the desired ratio of fiber contained in an end product,
   curing, and carbonizing said mixed-material while further pressurizing said mixed material after said mixed material is pressure-molded.

2. A method of manufacturing a carbon-fiber/carbon composite material as recited in claim 1, wherein said carbon fiber includes at least one of short fiber, whisker, and long fiber.

3. A method of manufacturing a carbon-fiber/carbon composite material as recited in claim 1, wherein said matrix material includes at least one of resin, pitch, carbon black, glassy carbon powder, carbon powder, graphite powder, and self sintering carbon powder.

4. A method of manufacturing a carbon-fiber/carbon composite material as recited in claim 2, wherein said step of mechanically mixing said matrix material and said carbon fiber after deciding the composition includes a step of mechanically mixing after deciding the composition, wherein the mixture includes 10 to 70% of carbon fiber by weight, 0 to 80% of resin/pitch by weight, 0 to 70% of self sintering carbon

6

powder by weight, and 0 to 50% of carbon black/glassy carbon powder/carbon poweder/graphite powder,

said resin/pitch, self sintering carbon, and carbon black/glassy carbon powder/carbon poweder/graphite powder forming said matrix material.

5.  A method of manufacturing a carbon-fiber/carbon composite material as recited in claim 3, wherein said step of mechanically mixing said matrix material and said carbon fiber after deciding the composition includes a step of mechanically mixing after deciding the composition, wherein the mixture includes 10 to 70% of carbon fiber by weight, 0 to 80% of resin/pitch by weight, 0 to 70% of self sintering carbon powder, and 0 to 50% of carbon black/glassy carbon powder/carbon powder/graphite powder by weight,

said resin/pitch, self sintering carbon powder, and carbon black/glassy carbon powder/carbon powder/graphite powder forming said matrix material.

# FIG.1

## EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | DE-A-2 714 364 (SCHUNK & EBE GMBH) <br> * page 8, paragraph 1; claims 1-9; figure 1; example 2 * | 1-5 | C04B35/52 <br> C04B35/64 |
| X | DE-A-2 615 651 (GOODYEAR AEROSPACE CORP.) <br> * page 5, paragraph 1; claims 1,5,9,17,19,20 * | 1-5 | |
| X | US-A-3 917 884 (P. F. JAHN) <br> * claims 1-6; examples 1,2 * | 1-5 | |
| X | EP-A-0 335 736 (NIPPON OIL CO., LTD. ET AL.) <br> * column 5, line 32 - line 45; claims 1,2,6; examples 1-7 * | 1-5 | |
| | | | TECHNICAL FIELDS SEARCHED (Int. Cl.5 ) |
| | | | C04B |

The present search report has been drawn up for all claims

| Place of search | Date of completion of the search | Examiner |
|---|---|---|
| THE HAGUE | 10 APRIL 1992 | HAUCK H.N. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document